(19) Europäisches Patentamt

European Patent Office

Office européen des brevets

(11) **EP 4 733 806 A1**

(12) **EUROPEAN PATENT APPLICATION**

(43) Date of publication:
**29.04.2026 Bulletin 2026/18**

(21) Application number: **24306774.1**

(22) Date of filing: **22.10.2024**

(51) International Patent Classification (IPC):
**G01S 13/42** (2006.01)   **G01S 13/87** (2006.01)
**G01S 13/931** (2020.01)

(52) Cooperative Patent Classification (CPC):
**G01S 13/931; G01S 13/42; G01S 13/878**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **STMicroelectronics International N.V.
1228 Plan-les-Ouates, Geneva (CH)**

(72) Inventors:
• **AL-KADI, Ghiath
8045 GRAZ (AU)**
• **CASAMASSIMA, Filippo
8051 THAL (AU)**
• **HINTEREGGER, Bernhard
8401 KALSDORF BEI GRAZ (AU)**

(74) Representative: **Casalonga
Casalonga & Partners
Bayerstraße 71/73
80335 München (DE)**

(54) **UWB SENSING SYSTEM AND METHOD FOR STATIC OBJECT LOCATION IN VEHICLE PARKING APPLICATIONS**

(57)    An Ultra-Wideband (UWB) sensing system comprises a first and a second UWB anchors (101, 102) that reciprocally transmit an UWB frame to each other. The system obtains a channel impulse response (CIR) from each UWB frame signal received by the other UWB anchor, and compares the obtained CIR to a reference CIR to identify a path indicative of a static object's presence. The system localizes the static object using an Angle of Arrival (AoA) of each signal. By leveraging UWB anchors for dual purposes such as communication devices and radar sensors, the system enables the reuse of vehicle access infrastructure for enhanced parking sensing, potentially reducing costs.

FIG.1

## Description

TECHNICAL DOMAIN

The present disclosure relates to sensor technologies, specifically to Ultra-WideBand (UWB) radar systems for vehicle parking assistance.

BACKGROUND

Automotive safety and convenience have become significant in the last decades, with a focus on the development of advanced sensor technologies.

Among these, sensors that assist drivers during vehicle maneuvering play a role. Parking assistance assists in the operation of driving an own vehicle into a parking spot and/or driving the own vehicle out of a parking spot. It usually relies on parking sensors such as ultrasonic sensors and cameras, that acquire information about objects existing around a vehicle to park, to guide the driver in his or her parking operations.

These systems, however, introduce additional costs as they necessitate dedicated devices specifically for parking assistance.

A current trend is to reuse onboard systems.

Ultra-Wideband (UWB) devices are known to equip vehicles, that can perform ranging operations and radar operations.

UWB data transmission uses very short radio frequency pulses (often less than a nanosecond) with low energy, over a large bandwidth of 500 MHz or more. UWB communications operate at frequencies between 3.1GHz and 10.6GHz, for example in a first band between 3.1GHz and 4.8GHz or a second band between 6GHz and 10.6GHz.

Ranging operations are used to detect and calculate a distance between the vehicle and a vehicle key. This for example allows to automatically unlock the vehicle doors in case of close proximity of the key holder or automatically lock the doors in the opposite case. In details, the UWB ranging function measures time-of-flight (ToF) and time-difference-of-arrival (TDOA) between multiple UWB anchors (corresponding to UWB transceivers) mounted on the vehicle and a given UWB tag (or agent) placed on an object or target, here the vehicle key. From the measurements, the tracked object can be 2D or 3D located through triangulation.

Omlox (RTM) is an exemplary UWB-based standard for ranging applications where the UWB anchors (also known as satellites or beacons) form a time-synchronized infrastructure.

The UWB radar function uses the Doppler effect of the UWB signals to detect changes in the surrounding environment. The Doppler effect is efficient for objects (deprived of a UWB tag) that are moving relative to the source of the signal, because it is based on the change in the frequency of the signal.

Vehicle-mounted radar devices, devoted to detecting moving targets, face limitations when the objects are stationary, i.e., static. Once the vehicle stops, changes in the environment may go undetected unless the radar device remains operational, leading to increased energy consumption.

SUMMARY

There is thus a need to improve the sensing systems for vehicle to allow static objects to be robustly detected, without incurring additional costs for additional components or maintaining a radar function in operation. Such improved sensing systems would enhance parking assistance.

According to a first aspect, the disclosure proposes an Ultra-Wideband (UWB) sensing system comprising a first UWB anchor and a second UWB anchor configured to receive an UWB frame signal from the first UWB anchor, the UWB sensing system being configured to obtain a channel impulse response (CIR) from the UWB frame signal, to compare the received CIR to a reference CIR in order to determine at least one second path corresponding to a static object in the received CIR, and to locate the static object relatively to the UWB sensing system using an Angle of Arrival (AoA) of the UWB frame signal along the determined second path.

The words "second path" are used to avoid any ambiguity with the "first" or "main" or "line-of-sight" path which is basically the direct line between the two anchors that are separated.

In some embodiments, the first and second UWB anchors may be same anchor (device), meaning that there is no "line-of-sight" path (the first path may be considered as a null or zero path), but only a second path related to the statis object.

By using the UWB ranging function (through the anchor-to-anchor frame) as a radar, the disclosure proposes an integrated and cost-effective approach to static and dynamic object detection around stationary vehicles.

The reference CIR may mirror all background, i.e., own reflection and permanent objects/obstacles within the field of view (FoV) of the UWB anchor or anchors. By comparing the received CIR to the reference CIR, the system can detect changes in the environment caused by the presence of static objects. This enables the identification of static targets, which is a challenge for conventional Doppler radar systems that typically only detect moving objects. The use of AoA calculations allows for the precise location of static objects relative to the UWB sensing system (e.g., a vehicle). The combination of CIR comparison and AoA calculation in the UWB sensing system enhances the functionality of the UWB anchors.

The disclosure therefore provides an innovative approach of utilizing UWB technology for parking assistance and enhancing driver safety in stationary vehicles.

In some embodiments, the first UWB anchor is configured to receive a second UWB frame signal from the second UWB anchor and to obtain a second CIR from the second UWB frame signal, the UWB sensing system being configured to compare the received second CIR to a second reference CIR in order to determine at least one third path corresponding to the static object in the received second CIR, wherein the static object is located relatively to the UWB sensing system using a second AoA of the second UWB frame signal along the determined third path.

Using a second UWB frame and corresponding AoA advantageously allows detection and location of the static object using the UWM ranging function only (through the CIR and AoA).

In some embodiments, the reference CIR is a CIR obtained by the second UWB anchor without any object in the vicinity of the first and second UWB anchors.

It advantageously allows a time-invariant background of the CIR to be modelled and then be removed from any received CIR to determine transient objects. The establishment of the reference CIR without nearby objects allows for a clearer distinction between the vehicle's typical reflection patterns and those caused by external objects. This approach enhances the accuracy of static object detection in the surrounding environment of the vehicle.

In some embodiments, determining the second path includes identifying a peak in a differential CIR built from a difference between the received CIR and the reference CIR, for example a first peak that is higher than a threshold built from a noise level in the received CIR.

Each path corresponding to a reflection of the UWB frame on an object is mirrored (hence detected) as a peak in the differential CIR. The first one (e.g. from the position in the CIR corresponding to the direct path between the anchors) corresponds to the closest object to the vehicle. The approach hence improves the efficiency of a parking assistance using the sensing system.

In some embodiments, locating the static object includes determining a phase difference between the UWB frame signal as received by a first UWB antenna along the second path and the UWB frame signal as received by a second UWB antenna along the second path, and determining the AoA of the UWB frame signal based on the phase difference.

Thanks to this configuration, an accurate determination of the AoA - hence of a direction where the static object corresponding to the second path is located - is made. This enables precise locating of static objects in the vicinity of the vehicle, which may be critical for parking applications.

In particular embodiments, the two UWB antennas belong to the second UWB anchor. The collocation of the antennas (or receivers) within a single UWB anchor improves the phase coherence between the received signals, which provides benefits to accurately calculate the phase difference. This enhances the precision of AoA calculations, leading to more accurate locating and tracking of static objects in the vicinity of the vehicle.

In some embodiments, locating the static object includes determining, based on the received CIR, an additional travel distance of the UWB frame signal along the second path compared to a first path, and determining a location of the static object based on the AoA and the additional travel distance.

Should the two UWB anchors be tightly synchronized, the travel distance *per se* along the second path can be used instead of the additional travel distance, because the latter can be inferred from the direct travel distance known from the geometric configuration (it mirrors the distance between the two UWB anchors). The above configuration provides an accurate location of the static object using the sole UWB ranging function.

In some embodiments, locating the static object includes determining a second phase difference between the second UWB frame signal as received by a third UWB receiver along the third path and the second UWB frame signal as received by a fourth UWB receiver along the third path, and determining the second AoA of the second UWB frame signal based on the second phase difference, and determining a location of the static object based on the AoA and the second AoA.

The intersection between the AoA from the second UWB anchor and the second AoA from the first UWB anchor allows accurate location of the static object to be obtained.

The use of multiple UWB receivers provides spatial resolution that can be used to map the environment around the vehicle. This mapping capability enhances the functionality of UWB systems beyond simple ranging, turning them into effective sensors for static object detection in parking applications.

In some embodiments, the UWB sensing system is further configured to obtain an UWB radar frame using the first and/or second UWB anchor, to perform moving object detection in the obtained UWB radar frame in order to generate a map of moving objects, and to merge the map of moving objects with a map locating the static object.

This enables the creation of a dynamic comprehensive map of the surrounding area, allowing for more accurate, reliable and responsive parking assistance.

In some embodiments, the first UWB anchor and the second UWB anchor are mounted on a vehicle, such as an automotive vehicle.

According to a second aspect, the disclosure provides a parking assistance system in a vehicle, comprising an UWB sensing system as previously presented, wherein the UWB sensing system feeds an alarm device with a location of the static object.

According to a third aspect, the disclosure also provides a sensing method comprising:

receiving, by a second UWB anchor, an UWB frame signal from a first UWB anchor,
obtaining a channel impulse response (CIR) from the UWB frame signal, comparing the received CIR to a reference CIR in order to determine at least one second path corresponding to a static object in the received CIR,

locating the static object relatively to the UWB anchors using an Angle of Arrival (AoA) of the UWB frame signal along the determined second path.

As mentioned previously, the first and second UWB anchors are preferably separate devices, e.g., mounted on a vehicle. However, in alternative embodiments, the first and second UWB anchors may be one and the same UWB anchor, i.e., belonging to the same device.

BRIEF DESCRIPTION OF THE DRAWINGS

Other advantages and characteristics of the invention will become apparent from the detailed description of the non-limiting embodiment and implementations and from the appended drawings in which:

[Fig. 1];
[Fig. 2];
[Fig. 3];
[Fig. 4];
[Fig. 5];
[Fig. 6];
[Fig. 7];
[Fig. 8]; and
[Fig. 9] schematically illustrate embodiments and implementations of the invention.

DETAILED DESCRIPTION

Ultra-WideBand (UWB) technology has found extensive application in various fields, including the automotive industry, where the technology serves as a cornerstone for advanced sensing and localization systems.

Vehicle-mounted UWB systems can be enhanced to be used as sensing systems for parking assistance, in particular to detect and locate static objects around a stationary vehicle, in addition to moving objects.

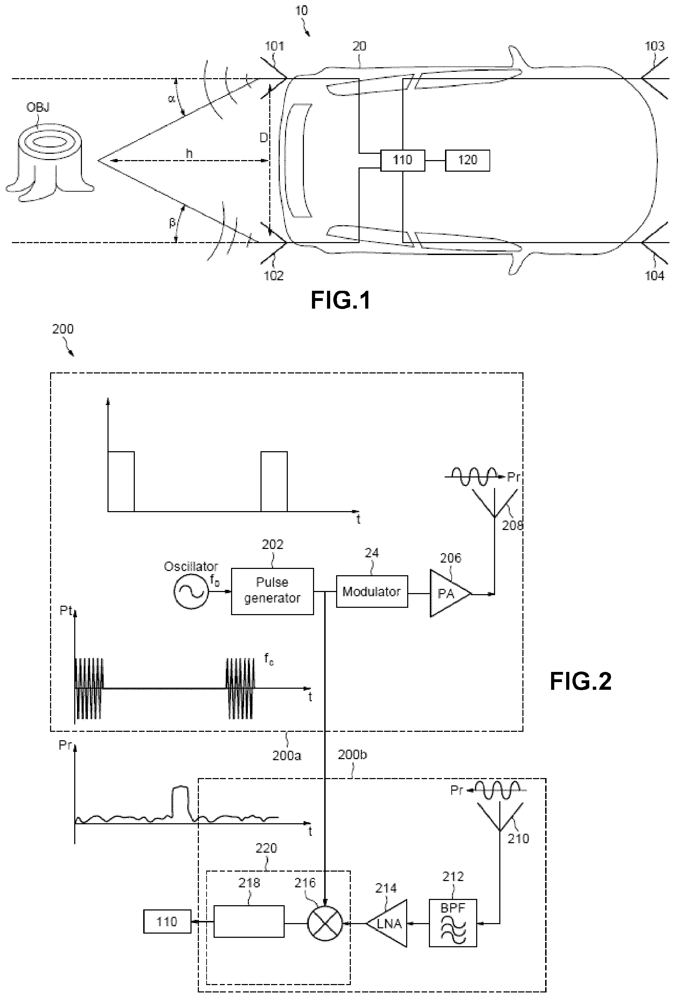

**Figure 1** illustrates a vehicle 20 equipped with an UWB-based parking sensor system 10 configured to detect a static object OBJ.

The Ultra-Wideband (UWB) sensing system 10 comprises a first UWB anchor 101 and a second UWB anchor 102 disposed in the back of the vehicle. Other UWB anchors 103, 104 may be provided, disposed on any side of the vehicle. As shown, four UWB anchors are located at each corner of the substantially rectangular vehicle 20. Of course, any number of UWB anchors can be used.

While the present disclosure concentrates on two rear UWB anchors to monitor static objects in the rear part of the vehicle, the same teachings can apply to any other pair of UWB anchors to monitor all or part of the front or of any side of the vehicle.

The vehicle shown in the Figure may be any vehicle, such as a road vehicle (car, coach, bus, truck, motorbike, and so on.), rail vehicle (train), water vehicle (boat), and so on.

An UWB anchor refers to a conventional component of an UWB sensing system that is designed to receive and transmit UWB signals for ranging and sensing purposes. In real-time location system, an UWB anchor is typically an electronic device that detects UWB pulses emitted by an UWB Tag and forwards them to a data processing unit for calculating tag positions.

Multiple UWB anchors are provided in a synchronized infrastructure forming an UWB network, such as the Omlox-based systems, An UWB anchor may propagate the network synchronization and organization (TDMA) over the UWB channel through Ranging Control Messages and then participate in the Initiation phase and collect Propagation Time measurements from all other satellites with a view of performing ranging computations regarding UWB tags.

As shown in **Figure 2**, an UWB anchor 200 typically consists of a UWB transceiver made of a transmitter part 200a and a receiver part 200b.

The transmitter part 200a includes a pulse generator 202, a modulator 204, a power amplifier 206 and one or more transmit antennas 208, and other necessary circuitry. The transmitter part is responsible for transmitting UWB frames for ranging or sensing purposes, under the control of a processing unit, such a data processing unit 110. The Pulse generator 202 generates electrical pulses having a very narrow width (typically in the order of 2 ns), that are repeated at a specific repetition frequency. Modulator 204 modulates the pulses generated by Pulse generator 202 onto a given Carrier frequency. Power Amplifier (PA) 206 amplifies the modulated UWB signal to ensure that the modulated UWB signal has sufficient power to be transmitted over the required distance. Transmit (T) Antenna 210 emits (or radiates) the amplified UWB signals into the environment. Repeated emitted pulses form an UWB frame.

The receiver part 200b operates in the reverse way. It includes one or more receive antennas 210, a Band-Pass Filter (BPF) 212, a Low Noise Amplifier (LNA) 214, a mixer 216, an integrator 218, and other necessary circuitry. The receiver part is responsible for receiving UWB frame signals. Receive (R) Antenna 210 captures UWB frame signals from the environment. Band-Pass Filter (BPF) 212 filters out-of-band noise and interference from the received UWB frame signals. Low Noise Amplifier (LNA) 214 amplifies the filtered UWB signal to maintain the signal integrity of the received UWB frame signals. Mixer 216 and Integrator 218 form a Correlator receiver 220 that extracts timing and phase information from the received amplified UWB frame signal. The received UWB frame signal is fed to a processing unit, such as data processing unit 110.

As explained below, an UWB anchor 200 operates in conjunction with other similar UWB anchors to enable the system to detect and locate static objects in the vicinity of the vehicle 20, in addition to moving objects if any.

Back to Figure 1, the UWB anchors 101 to 104 are connected to an on-board data processing unit 110 and a parking assistance unit 120. While on-board, the UWB sensing system 10 can operated as a parking assistance warning system that emits beeps or any other alarm signal when objects are too close to the vehicle 20.

The first UWB anchor 101 is configured to transmit an UWB frame to the second UWB anchor 102. Similarly, the second UWB anchor 102 may be configured to transmit a second UWB frame to the first UWB anchor 101 to have more robust and accurate location of static obj ects.

The transmitted UWB frame signal is made of pulses, the pulse shape of which being designed for ranging application. An exemplary pulse shape for ranging application includes a $x^{th}$-order Butterworth.

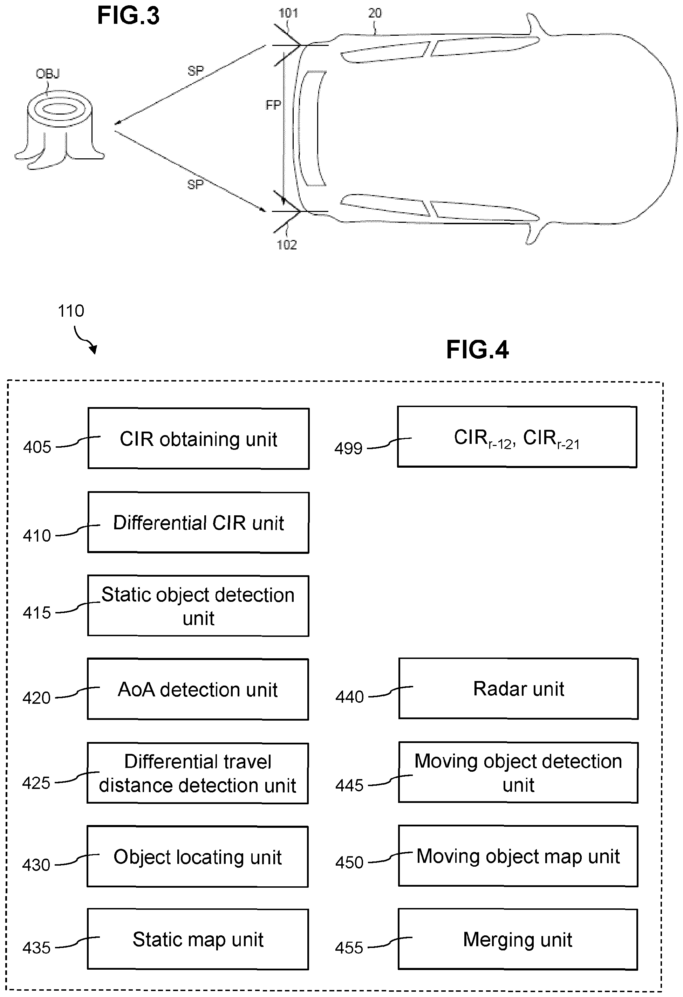

**Figure 3** illustrates how a transmitted UWB frame signal is propagated from the first UWB anchor 101.

The UWB frame signal propagates along a direct line-of-sight path from the first UWB anchor 101 to the second UWB anchor 102. This defines the first (transmission or propagation) path FP, where no object causes reflection of the signal.

Depending on the geometry of the transmit antenna 208, the UWB frame signal also propagates over more or less other directions from the first UWB anchor 101, with variable signal strengths.

The presence of a static object OBJ in the vicinity of the UWB anchors alters the propagation of the UWB frame signal, which reflects on it and towards the second UWB anchor 102, resulting in the formation of a second (transmission or propagation) path SP.

Additional objects (not shown for conciseness) may provide other reflections, hence other transmission or propagation paths.

The UWB frame signals as received by the receiver part 200b are provided to the data processing unit 110.

Inverse propagation paths exist for an UWB frame transmitted by the second UWB anchor 102 to the first UWB anchor 101.

**Figure 4** provides a functional representation of the data processing unit 110. It includes a CIR obtaining unit 405, a differential CIR unit 410, a static object detection unit 415, an AoA detection unit 420, a differential travel distance detection unit 425, an object locating unit 430, a static map unit 435, a radar unit 440, a moving object detection unit 445, a moving map unit 450, a merger unit 455 and registries 499.

The CIR obtaining unit 405 is configured to generate a channel impulse response (CIR) from the received UWB frame signals provided by the receiver part 200b. The CIR may be built by accumulating elementary (low energy) CIRs over the multiple pulses forming the UWB frame, to have a significant CIR. Each elementary CIR corresponds to the response of one single pulse of the sent UWB frame. The CIR corresponds to the aggregated responses for all the pulses forming the UWB frame transmitted.

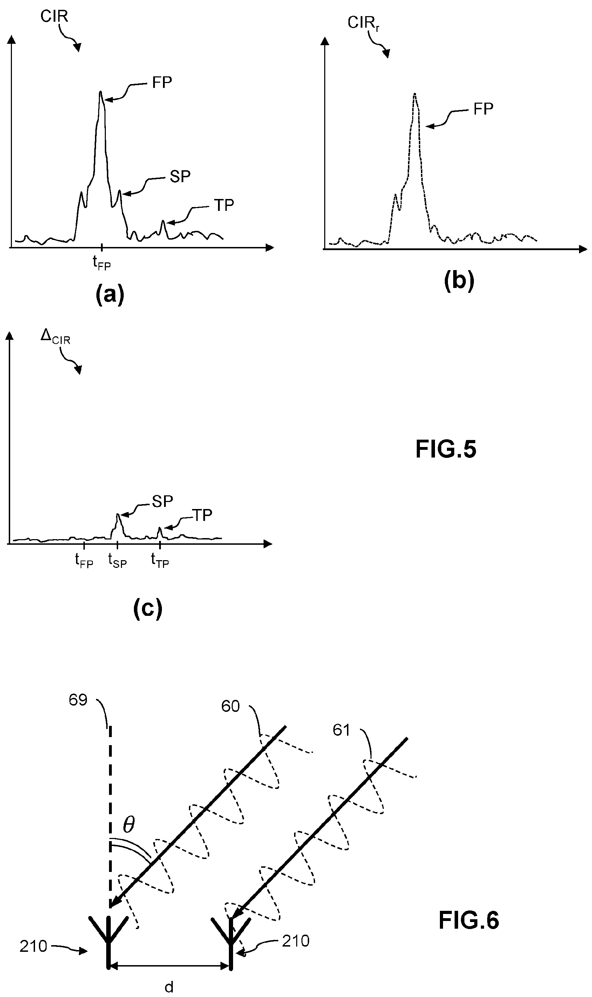

The propagation paths can be observed in the CIR as apparent from **Figure 5**, part (a). The abscissas of the plot represent travel or propagation times of the pulses between the two UWB anchors.

The two UWB anchors may not be fully synchronized in which case the origin of the plot does not necessarily represent the transmission instant by the first UWB anchor. In some embodiments, e.g. in Omlox systems, the two UWB anchors are tightly synchronized (e.g. using a coax cable between them to exchange an accurate clock signal) in which case the plot can be drawn to represent the exact travel times of the received signals.

The plot shows three signal peaks above the average noise, corresponding respectively to the direct path (first path FP) between the two UWB anchors and having a travel time $t_{FP}$, a second path SP resulting from the reflection of the signal on a first object OBJ and another path TP resulting from the reflection of the signal on another object. These paths are thus indicative of the multipath environment in which UWB systems operate, where the UWB frame signal can take various paths of different lengths due to reflections from surrounding obj ects.

Back to Figure 4, the CIR obtaining unit 405 feeds the Differential CIR unit 410 with the CIR so generated. The Differential CIR unit 410 compares the received CIR to a reference CIR, noted $CIR_r$ stored in the registries 499. Each UWB anchor has its own reference CIR. For example, $CIR_{r-12}$ for the first UWB anchor 101 in its relationship with the second UWB anchor 102 and $CIR_{r-21}$ for the second UWB anchor 102 in its relationship with the first UWB anchor 101.

The reference $CIR_r$ for a given UWB anchor in its relationship with another UWB anchor may be generated beforehand, for instance by placing the system (including the vehicle 20) within an anechoic chamber and performing a recording of the CIR when the other UWB anchor transmits an UWB frame to the given UWB anchor. In other words, the reference $CIR_r$ is built without any object in the vicinity of the two UWB anchors, in order to have a time-invariant background of the CIR.

Figure 5, part (b), shows an illustrative reference CIR, $CIR_r$, where only the direct path FP between the two UWB anchors considered is visible.

The Differential CIR unit 410 utilizes the CIR and the reference $CIR_r$ to obtain a differential CIR, noted $\Delta CIR$, in particular by subtracting $CIR_r$ from CIR after having aligned (superimposed) the first path (FP peaks in both plots). Figure 5, part (c), illustrates the differential CIR $\Delta CIR$ obtained from the CIR and the reference $CIR_r$ of the same Figure. The $\Delta CIR$ plot now shows only the reflection-based paths.

ΔCIR is fed by the Differential CIR unit 410 to the static object detection unit 415. As explained above with reference to Figure 3 and Figure 5, part (a), an object is detected for each reflection-based path. Hence the Differential CIR unit 410 determines thoqe paths corresponding to object OBJ by identifying the peaks in ΔCIR.

In embodiments, peaks are identified where the differential CIR is higher than a peak threshold. The peak threshold may be based on the average noise in the received UWB frame signal, for example five to ten times the average noise. The average noise may be obtained by calculating the mean of the signal in the received CIR (Figure 5, part (a)) before the FP peak, in particular before its rising edge.

The ΔCIR plot of Figure 5, part (c), shows two peaks SP, TP corresponding to two objects in the rear of vehicle 20. Those objects may be static or moving objects.

The AoA detection unit 420 operates on the received UWB frame signals provided by the receiver part 200b to determine an Angle of Arrival (AoA) of the UWB frame signal along at least one determined paths, possibly all. For parking assistance, we may focus on the closest object to the vehicle 20 corresponding to the first peak SP in the ΔCIR plot.

The part of a received UWB signal (e.g. any elementary signal corresponding to a pulse within the UWB frame signal) corresponding to that first peak SP may be retrieved, from which a phase difference analysis is conducted to obtain the AoA of the UWB frame signal. Of course, an average AoA may be calculated from the multiple pulses forming the UWB frame signal.

As shown in **Figure 6**, the part of the UWB frame signal received by a first antenna 210 is shown under reference 60 while the part of the same UWB frame signal received by a second antenna 210 is shown under reference 61. The two antennas preferably belong to the same UWB anchors to avoid any synchronization issue. Of course, they may belong to separate UWB anchors that are tightly synchronized.

The geometry of the antenna assembly makes it possible to know the distance 'd' therebetween and the normal direction 69 to the line segment connecting the two antennas. For ease of calculation, the UWB anchors are positioned on the vehicle 20 so that the normal direction 69 coincides with the longitudinal direction of the vehicle.

The AoA detection unit 420 can measure the phase difference Δφ between the two signals 60, 61, and calculate the AoA θ with respect to the normal direction 69 using the following formula:

$$\theta = \sin^{-1}\left(\frac{\lambda}{d} \cdot \frac{\Delta\varphi}{2\pi}\right)$$

where λ is the wavelength of the UWB frame signal.

The AoA θ can be calculated for the UWB frame transmitted by the first UWB anchor 101 to the second UWB anchor 102, in which case θ equals β as depicted in Figure 1 (to simplify geometric considerations, the normal direction 69 is made parallel to the longitudinal axis of the vehicle).

In embodiments, an AoA θ is also calculated for the second UWB frame transmitted by the second UWB anchor 102 to the first UWB anchor 101, in which case θ equals α as depicted in Figure 1.

The optional differential travel distance detection unit 425 operates on CIR using peak SR as identified above (from ΔCIR), to determine the additional travel distance δ of the UWB frame signal along the second path SP compared to the direct path FP. This can be done by retrieving $t_{SR}$ corresponding to the (center of) peak FP in CIR and $t_{SR}$ corresponding to the (center of) peak SP either in CIR or ΔCIR: δ= $v_\lambda \cdot (t_{SR} - t_{SR})$ where $v_\lambda$ is the propagation speed of the UWB frame signal (wavelength λ) in the present environment.

The object locating unit 430 is configured to use the determined AoA and optionally the additional travel distance δ to locate the object OBJ relatively to the UWB sensing system 10 (hence relatively to the vehicle 20).

Basically, the location of OBJ is obtained by triangulation, using the AoA determined for the UWB frame signal (hence β in the example of Figure 1) together with:

- the second AoA determined for the second UWB frame signal (hence α in the example of Figure 1). Indeed, the distance 'h' of OBJ to the vehicle can be calculated as follows:

$$h = \frac{D}{\tan\alpha . \tan\beta},$$

or

- the additional travel distance δ. Knowing D, δ defines a set of candidate points whose sum of the distances to the two UWB anchors is equal to D+δ. This set has only one intersection with the line crossing the second UWB anchor 102 and oriented along the AoA β. Geometric considerations give distance h, or

- both to obtain a more robust and more accurate location of OBJ.

The object locating unit 430 is therefore able to obtain the exact location of one or more objects (static or moving) in the vicinity of the vehicle. The location or locations are fed to the static map unit 435 which builds a static object map of the vehicle environment, i.e., a virtual map referencing the detected objects (including static and moving ones) in their exact position in a coordinate system.

In some embodiments, the static object map may be fed to a parking assistance unit 120.

The radar unit 440 is configured to acquire an UWB radar frame using the first or second or both UWB anchors or other radar devices. UWB radar operations are known: an UWB radar signal made of pulses having a pulse shape designed for sensing operations (e.g. a Gaussian pulse shape) is transmitted by an UWB anchor which also acquires the echoing signal to form an UWB radar frame.

Each or both UWB anchors can acquire their own UWB radar frame.

In embodiments where the UWB anchors are tightly synchronized, multi-static radar operation can be conducted where one UWB anchor emits the UWB radar signal while the other receives the echoes thereof and then builds an UWB radar frame.

The UWB radar frame or frames are fed to the moving object detection unit 445, that detects the moving object therein using conventional techniques.

The moving map unit 450 is configured to build a moving object map of the vehicle environment, i.e., a virtual map referencing the detected moving objects in their exact position in the coordinate system.

The static object map and the moving object map are fed to the merger unit 455 in order to consolidate a single 'merged' map of the detected objects. In particular, the moving object map helps the merger unit 455 to discriminate between the static objects and the moving objects within the static object map. Hence, the merger unit 455 is able to generate a map of static objects only, a map of moving objects only and/or a map of static and moving objects that are labelled to indicate their type (static or moving).

The static object map or the merged map is fed to the parking assistance unit 120.

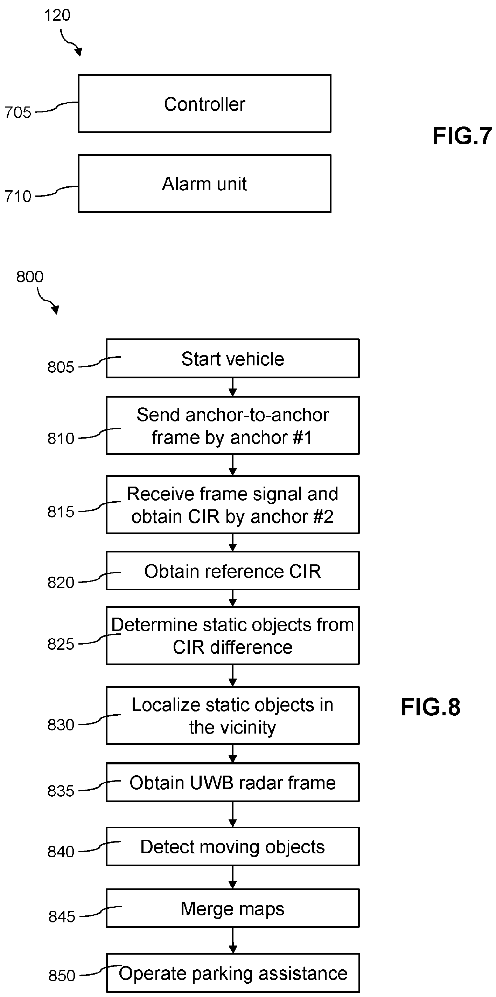

As depicted in **Figure 7**, the parking assistance unit 120 may comprise a controller unit 705 that processes any received map according to alarm policies, e.g. by generating an alarm signal when an object is detected too close to the vehicle 20 (distance h is compared to a threshold) and/or by generating different alarm signals whether the closest detected object is static or dynamic and/or by modulating a parameter (for example a beep repetition frequency) of the alarm signal based on the distance h of the closest object to the vehicle 20.

The alarm signal can be fed to the alarm unit 710 to warn the vehicle driver. For example, the alarm unit may be a mere speaker emitting beeps or a visual display.

**Figure 8** illustrates, using a flowchart, steps for parking assistance using a UWB sensing method according to embodiments.

The detection of static objects has high benefits for a driver going to his stationary vehicle to drive out of a parking spot.

Hence, the method for parking assistance begins with step 805 where the vehicle 20 starts, meaning the parking assistance process is also started: the UWB sensing system becomes operational and ready to perform the functions of the UWB sensing system.

Following the vehicle start, the first UWB anchor 101 transmits (step 810) an anchor-to-anchor UWB frame to the second UWB anchor 102. This UWB frame signal is transmitted through the environment and may encounter various objects, resulting in multiple signal paths due to reflections. In embodiments, the second UWB anchor 102 may also transmit an anchor-to-anchor UWB frame to the first UWB anchor 101.

At step 815, the second UWB anchor 102 receives the UWB frame signal from the first UWB anchor. A Channel Impulse Response (CIR) is obtained by the CIR obtaining unit 405 as described above. The CIR contains information about the signal paths, including any additional paths created by reflections off static objects.

In embodiments, the first UWB anchor 102 also receives the second UWB frame from which another CIR may be generated.

The method continues with step 820 where differential CIR unit 410 retrieves the reference CIR, $CIR_{r-21}$, for the second UWB anchor in its relationship with the first UWB anchor. Similarly, the reference CIR, $CIR_{r-12}$, for the first UWB anchor may also be retrieved.

As mentioned previously, the reference CIR is a baseline measurement of the UWB signal's characteristics between the two UWB anchors involved, when no objects are present in the vicinity of the UWB anchors. This reference CIR serves as a comparison point for detecting changes in the environment due to the presence of static objects. Step 820 may merely consist in retrieving the reference CIR or CIRs from the registries 499.

Next, step 825 consists for static object detection unit 415 to determine objects from the differential CIR $\Delta CIR$ built as a difference between the received CIR and the retrieved reference CIR. As explained above, objects are detected where peaks appear in the differential CIR $\Delta CIR$.

Once the presence of objects is detected, next step 830 involves locating the objects in a coordinate system of the vehicle 20. To do so, the AoA detection unit 420 calculates the Angle of Arrival (AoA) $\beta$ of the UWB frame signal along the path corresponding to a detected object towards the second UWB anchor 102, as explained above. In embodiments, it is also done to calculate the AoA $\alpha$ of the second UWB frame signal along the path corresponding to the same object, but towards the first UWB anchor 101. In embodiments, the differential travel distance detection unit 425 determines the additional travel distance $\delta$ of the UWB frame signal along the path corresponding to the detected object.

The exact position of the object is inferred from $\beta$ together with $\alpha$ or $\delta$ or both.

This may be done for one (the closest one) or more objects to draw a 'static' map of detected objects.

Next, radar-based operations to enhance the map of detected objects can be conducted. These steps are optional, meaning the previous map may be directly provided to the parking assistance unit 120 to operate parking assistance at step 850.

In the enhancing radar-based operations, step 835 consists for the radar unit 440 to obtain one or more UWB radar frames using the first and/or second UWB anchors, to have more knowledge of moving objects within the environment, providing dynamic information about the surroundings. That is why, at step 840, moving object detection is performed in the obtained UWB radar frame, by the moving object detection unit 445. A map of the moving objects can therefore been drawn by the moving map unit 450. Next, at step 845, the maps of static and moving objects are then merged to provide a comprehensive view of the environment around the vehicle, including both static and dynamic objects.

The merged map can be used to assist the driver during parking maneuvers, i.e., to trigger alerts if potential collisions are detected due to close proximity of one object to the vehicle.

Therefore, the merged map (or alternatively the static map) is processed at step 850 by the parking assistance unit 120 to conduct parking assistance operations 550. The parking assistance unit 120 is fed with the location of static and moving objects to alert the driver through visual, auditory, or haptic signals.

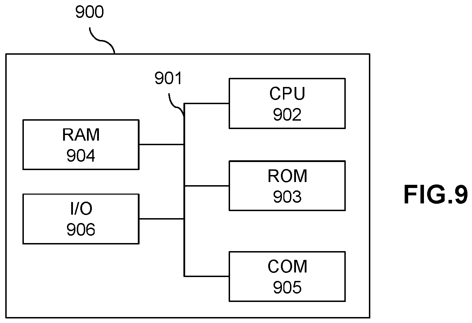

**Figure 9** illustrates a hardware architecture for any device that can operate as UWB-based parking sensor system 10 or subpart thereof.

Device 900 comprises an internal communication bus 901 to which are preferably connected:

- one or more central processing units 902, such as one or more CPU processors or microprocessors ;
- a storage memory 903 - typically ROM and/or hard disk and/or flash memory - for storing computer programs intended to implement all or some of the operations described above;
- a random access memory (RAM) 904, for storing the executable code of the computer programs as well as the registers adapted to record the variables and parameters necessary for their execution;
- a communication interface 905 connected to a communication network or bus in order to communicate with one or more peripherals, e.g. the UWB anchors; and
- one or more I/O 906 inputs/outputs enabling a user or administrator to interact with the computer programs, both in configuration and in operation. Typically, the inputs/outputs may include a screen serving as a graphical interface with the user and/or a keyboard or any other pointing means enabling the user to interact.

The executable code stored in memory 903 may be received by means of the communication network, via interface 905, in order to be stored therein prior to execution. Alternatively, the executable code is not stored in non-volatile memory 903 but can be loaded into volatile memory 904 from a remote server via the communication network for direct execution.

The central processing unit 902 is preferably adapted to control and direct the execution of the instructions or parts of the software code of the computer program(s). On power-up, the program or programs that are stored in non-volatile memory 903 or on the remote server are transferred/loaded into random access memory 904, which then contains the executable code of the program or programs, as well as registers for storing variables and parameters necessary for implementing the methods.

The above description shows embodiments of object detection where the first and second UWB anchors 101, 102 are separate devices at separate locations in the vehicle 20. However, the above teachings also apply when the first and second UWB anchors are one and the same anchor device, i.e., the same UWB anchor emits the UWB signal and receives its echo from the static object to detect. In that case, the reference CIR can be obtained by recording the own echo of the considered UWB anchor (preferably in an anechoic chamber).

**Claims**

1. An Ultra-Wideband (UWB) sensing system (10) comprising a first UWB anchor (101) and a second UWB anchor (102) configured to receive an UWB frame signal (60, 61) from the first UWB anchor, the UWB sensing system being configured to obtain a channel impulse response (CIR) from the UWB frame signal, to compare the received CIR to a reference CIR ($CIR_r$) in order to determine at least one second path (SP) corresponding to a static object (OBJ) in the received CIR, and to locate the static object relatively to the UWB sensing system using an Angle of Arrival (AoA, $\theta$, $\alpha$, $\beta$) of the UWB frame signal along the determined second path.

2. The UWB sensing system of Claim 1, wherein the first UWB anchor (101) is configured to receive a second UWB frame signal from the second UWB anchor and to obtain a second CIR from the second UWB frame signal, the UWB sensing system being configured to compare the received second CIR to a second reference CIR in order to determine at least one third path corresponding to the static object in the received second CIR, wherein the static object is located relatively to the UWB sensing system using a second AoA of the second UWB frame signal along the determined third path.

3. The UWB sensing system of Claim 1 or 2, wherein the reference CIR is a CIR obtained by the second UWB anchor without any object in the vicinity of the first and second UWB anchors.

4. The UWB sensing system of anyone of Claims 1 to 3, wherein determining the second path includes identifying a peak in a differential CIR ($\Delta$CIR) built from a difference between the received CIR and the reference CIR, for example a first peak that is higher than a threshold built from a noise level in the received CIR.

5. The UWB sensing system of anyone of Claims 1 to 4, wherein locating the static object includes determining a phase difference ($\Delta\varphi$) between the UWB frame signal (60) as received by a first UWB antenna (210) along the second path (SP) and the UWB frame signal (61) as received by a second UWB antenna (210) along the second path (SP), and determining the AoA of the UWB frame signal based on the phase difference.

6. The UWB sensing system of Claim 5, wherein the two UWB antennas belong to the second UWB anchor (102).

7. The UWB sensing system of anyone of Claims 1 to 6, wherein locating the static object includes determining, based on the received CIR, an additional travel distance ($\delta$) of the UWB frame signal along the second path compared to a first path, and determining a location of the static object based on the AoA ($\theta$, $\alpha$, $\beta$) and the additional travel distance.

8. The UWB sensing system of anyone of Claims 2 to 6 when depending on Claim 2, wherein locating the static object includes determining a second phase difference between the second UWB frame signal as received by a third UWB receiver along the third path and the second UWB frame signal as received by a fourth UWB receiver along the third path, and determining the second AoA of the second UWB frame signal based on the second phase difference, and determining a location of the static object based on the AoA ($\beta$) and the second AoA ($\alpha$).

9. The UWB sensing system of anyone of Claims 1 to 8, wherein the UWB sensing system is further configured to obtain an UWB radar frame using the first and/or second UWB anchor, to perform moving object detection in the obtained UWB radar frame in order to generate a map of moving objects, and to merge the map of moving objects with a map locating the static object.

10. The UWB sensing system of anyone of Claims 1 to 9, wherein the first UWB anchor and the second UWB anchor are mounted on a vehicle (20), such as an automotive vehicle.

11. A parking assistance system in a vehicle, comprising an UWB sensing system according to anyone of Claims 1 to 10, wherein the UWB sensing system feeds an alarm device (120) with a location of the static object.

12. A sensing method comprising:

receiving (815), by a second UWB anchor (102), an UWB frame signal (60, 61) from a first UWB anchor (101),
obtaining a channel impulse response (CIR) from the UWB frame signal, comparing the received CIR to a reference CIR ($CIR_r$) in order to determine at least one second path (SP) corresponding to a static object (OBJ) in the received CIR,
locating the static object relatively to the UWB anchors using an Angle of Arrival (AoA, , $\theta$, $\alpha$, $\beta$) of the UWB frame signal along the determined second path.

FIG.1

FIG.2

# FIG.3

101 20

OBJ

SP

FP

SP

102

110

# FIG.4

| | |
|---|---|
| 405 — CIR obtaining unit | 499 — $CIR_{r-12}$, $CIR_{r-21}$ |
| 410 — Differential CIR unit | |
| 415 — Static object detection unit | |
| 420 — AoA detection unit | 440 — Radar unit |
| 425 — Differential travel distance detection unit | 445 — Moving object detection unit |
| 430 — Object locating unit | 450 — Moving object map unit |
| 435 — Static map unit | 455 — Merging unit |

**FIG.5**

**FIG.6**

120

| 705 — | Controller |
| 710 — | Alarm unit |

**FIG.7**

800

| 805 — | Start vehicle |
| 810 — | Send anchor-to-anchor frame by anchor #1 |
| 815 — | Receive frame signal and obtain CIR by anchor #2 |
| 820 — | Obtain reference CIR |
| 825 — | Determine static objects from CIR difference |
| 830 — | Localize static objects in the vicinity |
| 835 — | Obtain UWB radar frame |
| 840 — | Detect moving objects |
| 845 — | Merge maps |
| 850 — | Operate parking assistance |

**FIG.8**

900

901

RAM
904

I/O
906

CPU
902

ROM
903

COM
905

**FIG.9**

EUROPEAN SEARCH REPORT

Application Number

EP 24 30 6774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/383716 A1 (CASAMASSIMA FILIPPO [AT] ET AL) 1 December 2022 (2022-12-01) * paragraphs [0030] - [0032], [0039] - [0041], [0043] - [0048] * ----- | 1-12 | INV. G01S13/42 G01S13/87 G01S13/931 |
| A | US 2022/408400 A1 (CASAMASSIMA FILIPPO [AT] ET AL) 22 December 2022 (2022-12-22) * paragraphs [0012], [0030], [0031], [0034]; figures 1,2,4b,5b * ----- | 1-12 | |
| A | US 2021/302536 A1 (CASAMASSIMA FILIPPO [AT] ET AL) 30 September 2021 (2021-09-30) * paragraphs [0013], [0018], [0019], [0025], [0028], [0036]; figure 3 * ----- | 1-12 | |

TECHNICAL FIELDS SEARCHED (IPC)

G01S

The present search report has been drawn up for all claims

| Place of search | Date of completion of the search | Examiner |
|---|---|---|
| Munich | 18 March 2025 | Metz, Carsten |

## ANNEX TO THE EUROPEAN SEARCH REPORT
## ON EUROPEAN PATENT APPLICATION NO.

EP 24 30 6774

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2025

| Patent document cited in search report | Publication date | Patent family member(s) | | Publication date |
|---|---|---|---|---|
| US 2022383716 A1 | 01-12-2022 | CN | 115412919 A | 29-11-2022 |
| | | EP | 4095818 A1 | 30-11-2022 |
| | | US | 2022383716 A1 | 01-12-2022 |
| US 2022408400 A1 | 22-12-2022 | CN | 115515224 A | 23-12-2022 |
| | | EP | 4109123 A1 | 28-12-2022 |
| | | US | 2022408400 A1 | 22-12-2022 |
| US 2021302536 A1 | 30-09-2021 | CN | 113449348 A | 28-09-2021 |
| | | EP | 3886468 A1 | 29-09-2021 |
| | | US | 2021302536 A1 | 30-09-2021 |

EPO FORM P0459

For more details about this annex : see Official Journal of the European Patent Office, No. 12/82